# EUROPEAN PATENT APPLICATION

(11) **EP 2 461 405 A1**
(43) Date of publication of application: **06.06.2012**
(21) Application number: 11191681.3
(22) Date of filing: 02.12.2011
(51) Int. Cl.: H01M 8/02

(54) **Solid oxide fuel cell**

(30) Priority: 03.12.2010 JP 2010270038; 19.07.2011 JP 2011158158
(71) Applicant: NGK Insulators, Ltd., Nagoya-shi, Aichi 467-8530 (JP)
(72) Inventor: Okamoto, Taku, Nagoya City Aichi-Ken, 467-8530 (JP); Yoshida, Toshihiro, Nagoya City Aichi-Ken, 467-8530 (JP); Nishitoba, Masaru, Nagoya City Aichi-Ken, 467-8530 (JP); Ryu, Takashi, Nagoya City Aichi-Ken, 467-8530 (JP); Ohmori, Makoto, Nagoya City Aichi-Ken, 467-8530 (JP)
(74) Representative: Paget, Hugh Charles Edward

(57) **Abstract**

A solid oxide fuel cell is provided that includes an anode current collecting layer, a cathode, an electrolyte layer, and an anode active layer. The anode current collecting layer contains Ni or NiO, and an oxide represented by a general formula AEZr0₃ where AE is one or a combination of two or more selected from the group consisting of Ca, Sr, Mg, and Ba. The electrolyte layer is disposed between the anode current collecting layer and the cathode. The anode active layer is disposed between the electrolyte layer and the anode current collecting layer.

## Description

### BACKGROUND

### Technical Field

The technology disclosed herein relates to a solid oxide fuel cell.

### Background Information

In a solid oxide fuel cell (SOFC) stack that includes a plurality of unit cells each having an electrolyte layer and a cathode, an interconnector is provided that electrically connects the anode of a fuel cell and the cathode of another fuel cell.
Japanese Patent Application Laid-Open 2004-253376A discloses a fuel cell that includes a support substrate, an electrolyte layer wound around the support substrate so as to expose a part of the support substrate, an anode provided between the electrolyte layer and the support substrate, an interconnector stacked on the exposed portion of the support substrate, and an intermediate layer provided at the interface between the interconnector and the support substrate. The support substrate is composed of Ni-Y₂0₃, the interconnector is composed of La(Mg,Cr)O₃, and the intermediate layer is composed of a ZrO₂ cermet containing Ni and a rare earth element such as Y

However, the present inventors have found that conventional art is problematic in the following point.

The inventors have found that stacking and co-sintering an Ni-Y₂O₃ layer and an Ni-YSZ layer form a dense insulating layer composed of Zr-Y-O between the Ni-Y₂O₃ layer and the Ni-YSZ layer. Although the principle of formation of such an insulating layer is not clear, it is presumed that Y (yttrium) present in the Ni-Y₂O₃ layer is diffused in ZrO₂ present in the Ni-YSZ layer and creates a solid solution, thus forming an insulating layer. Once a dense insulating layer is formed, it is likely that the resistance to permeation of fuel gas and the electric resistance of the fuel cell are increased, and fuel cell performance deteriorates.

An object of the technology disclosed herein is to suppress formation of an insulating layer between an anode current collecting layer and an anode active layer in a fuel cell.

### SUMMARY

In accordance with one aspect of the technology disclosed herein, a solid oxide fuel cell is provided that includes an anode current collecting layer, a cathode, an electrolyte layer, and an anode active layer. The anode current collecting layer contains Ni or NiO, and an oxide represented by a general formula AEZrO₃ where AE is one or a combination of two or more selected from the group consisting of Ca, Sr, Mg, and Ba. The electrolyte layer is disposed between the anode current collecting layer and the cathode. The anode active layer is disposed between the electrolyte layer and the anode current collecting layer.

With the technology disclosed herein, a solid oxide fuel cell can be provided with which formation of the above-described insulating layer composed of Zr- Y-O is suppressed, and thus deterioration of fuel cell performance is suppressed.

### BRIEF DESCRIPTION OF DRAWINGS

Fig. 1 is a transverse cross-sectional view showing one embodiment of a segmented-in-series solid oxide fuel cell.
Fig. 2 is a longitudinal cross-sectional view taken along the arrow II-II of the segmented-in-series solid oxide fuel cell of Fig. 1.
Fig. 3 is an SEM micrograph showing the interface between an Ni-CaZrO₃ layer and an Ni-YSZ layer, and its surroundings.
Fig. 4 is an SEM micrograph showing the interface between an Ni-CaTiO₃ layer and an Ni-YSZ layer, and its surroundings.
Fig. 5 is an SEM micrograph showing the interface between an Ni-Y₂O₃ layer and an Ni-YSZ layer, and its surroundings.

### DETAILED DESCRIPTION OF EMBODIMENTS

### 1. Embodiment 1

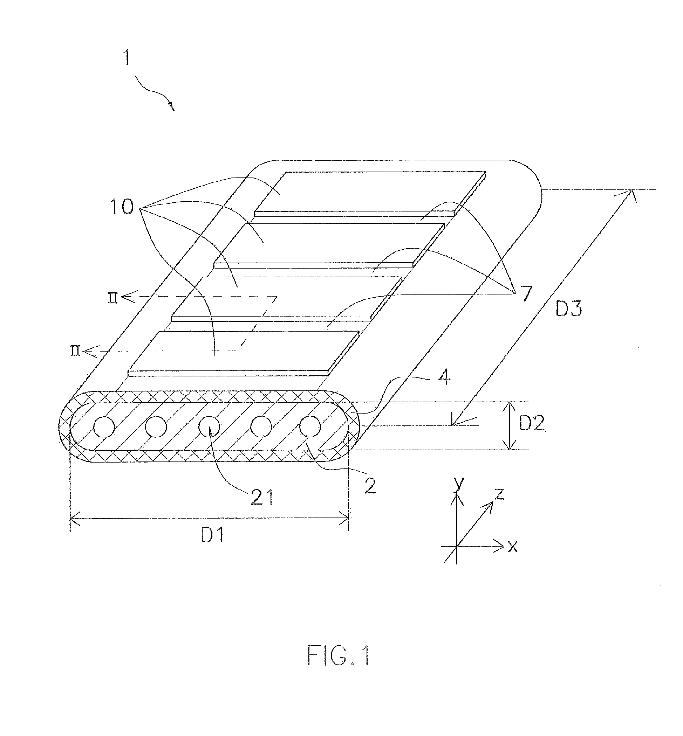

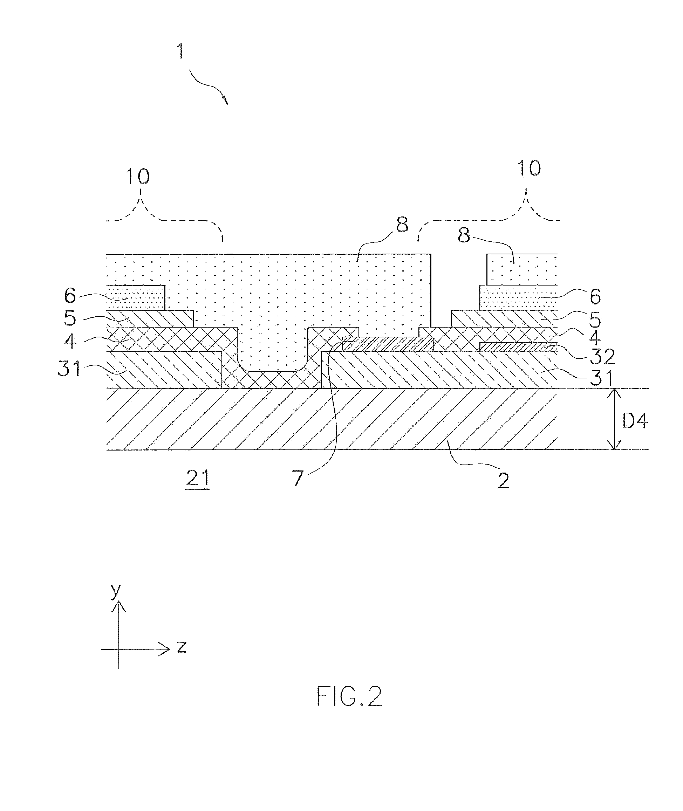

As shown in Figs. 1 and 2, the segmented-in-series solid oxide fuel cell (hereinafter simply referred to as a "fuel cell") 1 of this embodiment includes a support substrate 2, an anode (including an anode current collecting layer 31 and an anode active layer 32), an electrolyte layer 4, a barrier layer 5, a cathode 6, an interconnector 7, and a current collecting layer 8. In addition, the fuel cell 1 includes a power-generating section 10. In Fig. 1, the current collecting layer 8 is not shown for convenience of description.

The support substrate 2 has a shape that is flat and elongated in one direction (z-axis direction). The support substrate 2 is composed of a porous material. The support substrate 2 may contain Ni (nickel). More specifically, the support substrate 2 may contain Ni-Y₂O₃ (nickel-yttria) as the principal component. Nickel may be in an oxidized form (NiO), but at the time of power generation, NiO may be reduced to Ni by hydrogen gas. The support substrate 2 may contain a component other than the Ni-containing material, for example, it may contain Fe (iron). The support substrate 2 may contain Fe in an oxidized form (Fe₂O₃).

As used herein, the phrase "to contain a material as the principal component" may mean that the material is contained in a proportion of no less than 50 wt%, or in a proportion of no less than 60 wt%, no less than 80 wt%, or no less than 90 wt%. The phrase "to contain a material as the principal component" encompasses a case where the whole is composed solely of the material.

As shown in Figs. 1 and 2, a gas flow channel 21 is formed inside the support substrate 2. The gas flow channel 21 extends in the longitudinal direction (z-axis direction) of the support substrate 2. At the time of power generation, fuel gas is introduced into the gas flow channel 21, flows through the pores of the support substrate 2, and is supplied to the anode, which will be described below.

The anode current collecting layer 31 of the anode is provided on the support substrate 2. A plurality of anodes are disposed on one support substrate 2 in the longitudinal direction (z-axis direction) of the support substrate 2. That is, in the longitudinal direction (z-axis direction) of the support substrate 2, space is provided between the adjacent anodes.

The anode current collecting layer 31 contains an oxide represented by formula (1):

(AE₁₋ₓAₓ)(B_{1-y+z}C_{y})O₃ (1)

wherein AE is at least one alkaline earth metal; the A site contains at least one element selected from the group consisting of rare-earth elements, A1, and Cr; the B site contains at least one element selected from the group consisting of Ti and Zr; the C site contains at least one element selected from the group consisting of Nb, V, Mn, Cr, Fe, Co, Cu, Ni, Zn, Mg, and A1; and 0 ≤ x ≤ 0.3, 0 ≤ y ≤ 0.22, and -0.1 ≤ z ≤ 0.1. The A site, the B site, and the C site may substantially contain only the elements respectively listed above. The anode current collecting layer 31 can contain this oxide as the principal component.
In the case where the anode current collecting layer 31 includes two or more layers, it is sufficient that at least the layer disposed closest to the anode active layer (the layer may be in contact with the anode active layer) contains the oxide having the composition represented by the formula (1).
The anode current collecting layer 31 may contain a component other than the oxide represented by the formula (1), for example, it may contain nickel. Nickel may be in an oxidized form (NiO), but at the time of power generation, NiO may be reduced to Ni.
As explained above, the anode current collecting layer 31 may contain Ni or NiO as well as an oxide represented by the general formula AEZrO₃ where AE is one or a combination of two or more selected from the group consisting of Ca, Sr, Mg, and Ba.
In the case where the anode current collecting layer 31 contains CaZrO₃ of the foregoing general formula and NiO, it is preferable that the anode current collecting layer 31 further contains Si (silicon). The anode current collecting layer 31 may contain Si in an SiO₂ (silica) form. Such Si functions as a sintering aid in the step of sintering the anode current collecting layer 31, and enhances sintering of the anode current collecting layer 31. Accordingly, the strength of the anode current collecting layer 31 is enhanced by addition of Si.
As will be clear from the Examples below, controlling the Si content of the anode current collecting layer 31 so as to be a specific amount (for example, about 5 ppm or greater and about 2000 ppm or less) allows the anode current collecting layer 31 to have sufficient strength and suitable porosity simultaneously.
In the case where the anode current collecting layer 31 contains CaZrO₅, NiO, and Si, it is preferable that the anode current collecting layer 31 further contains Fe (iron). The anode current collecting layer 31 may contain Fe in an Fe₂O₃ (iron oxide) form. Such Fe is present as a eutectic compound (Fe-Si-O) in the step of sintering the anode current collecting layer 31, and the grain growth of the sintered body is enhanced. As a result, the strength of the anode current collecting layer 31 is enhanced by addition of Fe.
As will be clear from the Examples below, controlling the Fe content of the anode current collecting layer 31 so as to be a specific amount (for example, about 10000 ppm or less) allows the anode current collecting layer 31 to have more enhanced strength and any crack in the anode active layer 32 and the electrode layer 4 to be suppressed simultaneously.

The anode active layer 32 is provided on the anode current collecting layer 31 in a region narrower than the anode current collecting layer 31. That is, a part of the anode current collecting layer 31 where the anode active layer 32 is not stacked is exposed. The anode active layer 32 may contain zirconia. Examples of materials constituting the anode active layer 32 include Ni-YSZ (yttria-stabilized zirconia), ScSZ (scandia-stabilized zirconia), and the like.

Even when the anode current collecting layer 31 and the anode active layer 32 are stacked and co-sintered, an insulating layer is unlikely to be formed between the anode current collecting layer 31 and the anode active layer 32, thereby suppressing an increase of the electric resistance of the fuel cell 1.

The thickness of the anode current collecting layer may be about 50 µm to 500 µm, and the thickness of the anode active layer may be about 5 µm to 100 µm.

As shown in Fig. 2, the electrolyte layer 4 is provided on the anode active layer 32 so as to cover the anode active layer 32. In the region where the anode active layer 32 is not provided, the electrolyte layer 4 may be provided on the anode current collecting layer 31. In the region where the anode current collecting layer 31 is not provided, the electrolyte layer 4 may be provided on the support substrate 2. The electrolyte layer 4 is dense therefore the electrolyte layer 4 together with the interconnector 7 can separate air from fuel gas in the fuel cell 1. The electrolyte layer 4 may also be called a solid electrolyte layer.

The electrolyte layer 4 is provided as to be continuous from one interconnector 7 to another interconnector 7 adjacent to the interconnector 7 in the longitudinal direction (z-axis direction) of the support substrate 2. In other words, the electrolyte layer 4 is provided so as to be continuous from the anode current collecting layer 31 of one anode to the edge of the current collecting layer 31 of another anode adjacent to the anode in the longitudinal direction (z-axis direction) of the support substrate 2. In the longitudinal direction (z-axis direction) of the support substrate 2, the electrolyte layer 4 discontinues at the portion where the interconnector 7 is provided.

The electrolyte layer 4 can contain zirconia as the principal component. For example, the electrolyte layer 4 may be a sintered body of a zirconia-based material such as yttria-stabilized zirconia, e.g., 3YSZ and 8YSZ; and scandia-stabilized zirconia (ScSZ).

The barrier layer 5 is provided on the electrolyte layer 4. In Fig. 2, on the portion where no electrolyte layer 4 is provided, no barrier layer 5 is provided. That is, one barrier layer 5 is provided so as to correspond to one anode. Therefore, a plurality of barrier layers 5 are provided on one support substrate 2 in the longitudinal direction (z-axis direction) of the support substrate 2.

The barrier layer 5 may contain ceria (cerium oxide) as the principal component. Specific examples of materials of the barrier layer 5 include ceria and ceria-based materials containing a rare earth metal oxide that is in a solid solution formed with ceria. Specific examples of ceria-based materials include gadolinium-doped ceria (GDC: (Ce,Gd)O₂), samarium-doped ceria (SDC: (Ce,Sm)O₂), and the like.

The cathode 6 is disposed on the barrier layer 5 so as not to extend beyond the outer edge of the barrier layer 5. That is, one cathode 6 is provided so as to correspond to one anode. Therefore, a plurality of cathodes 6 are provided on one support substrate 2 in the longitudinal direction (z-axis direction) of the support substrate 2.

The cathode 6 may contain, for example, a lanthanum-containing perovskite complex oxide as the principal component. Specific examples of the lanthanum-containing perovskite complex oxide include lanthanum strontium cobalt ferrite (LSCF), lanthanum manganite, lanthanum cobaltite, and lanthanum ferrite. The lanthanum-containing perovskite complex oxide may be doped with strontium, calcium, chromium, cobalt, iron, nickel, aluminium, or the like.

The interconnector 7 is stacked on the anode current collecting layer 31 of the anode. In other words, an intermediate layer, which will be described below, or another layer may be inserted between the anode current collecting layer 31 and the interconnector 7, and the interconnector 7 may be directly provided on the anode 3. That is, the phrases "to be provided on a member" and "to be stacked on a member" each encompass both the case where two members are disposed so as to be in contact and the case where two members are disposed so as to overlap in the y-axis direction without being in contact.
The interconnector 7 is provided so as not to overlap, in particular, the anode active layer 32. That is, space is provided between the electrolyte layer 4 and the interconnector 7 in the longitudinal direction (z-axis direction) of the support substrate 2.

The interconnector 7 is disposed so as to connect electrolyte layers 4 in the longitudinal direction (z-axis direction) of the support substrate 2. Thereby, power-generating sections 10 adjacent to each other in the longitudinal direction (z-axis direction) of the support substrate 2 are electrically connected.

The interconnector 7 is dense so that the fuel gas in the anode side and air in the cathode side cannot pass through. The specific composition of the material of the interconnector 7 is not specifically limited, and the interconnector 7 can contain, for example, a chromite-based material (such as lanthanum chromite).

The current collecting layer 8 is disposed so as to electrically connect the interconnector 7 and the power-generating section 10. Specifically, the current collecting layer 8 is provided so as to be continuous from a cathode 6 of a power-generating section 10 to an interconnector 7 that is included in a power-generating section 10 located adjacent to the power-generating section 10 including the cathode 6. The current collecting layer 8 is electrically conductive and may be composed of, for example, the same material as that of the interconnector 7.

An intermediate layer may be inserted between the anode current collecting layer 31 and the interconnector 7. The intermediate layer is a layer that has electrical conductivity and can be regarded also as a part of the interconnector 7 or a part of the anode current collecting layer 31.
The thickness of the intermediate layer 9 is not limited to a specific numerical value, and can be set to be, for example, 5 µm to 100 µm.

The power-generating section 10 is a portion including the anode (the anode current collecting layer 31 and the anode active layer 32) and the cathode 6 that corresponds to the anode. Specifically, the power-generating section 10 includes the anode, the electrolyte layer 4, the barrier layer 5, and the cathode 6 that are stacked in the thickness direction (y-axis direction) of the support substrate 2.

The power-generating section 10 is electrically connected to the adjacent power-generating sections 10 by the current collecting layer 8 and the interconnector 7. That is, not only the interconnector 7 but also the current collecting layer 8 contribute to the connection between the power-generating sections 10, and such a configuration is also encompassed within the configuration in which an interconnector "electrically connects power-generating sections".

Specifically, the size of the respective members of the fuel cell 1 can be set as follows.
Width D1 of support substrate 2: 1 cm to 10 cm
Thickness D2 of support substrate 2: 1 mm to 10 mm
Length D3 of support substrate 2: 5 cm to 50 cm
Distance D4 from the external surface (interface between support substrate 2 and anode) to channel 21 of support substrate 2: 0.1 mm to 4 mm
Thickness of anode current collecting layer 31: 50µm to 500 µm
Thickness of anode active layer 32: 5µm to 30 µm
Thickness of electrolyte layer 4: 3µm to 50 µm
Thickness of barrier layer 5: µm to 50 µm
Thickness of cathode 6: 10µm to 100 µm
Thickness of interconnector 7: µm to 100 µm
Thickness of current collecting layer 8: 50µm to 500 µm
Needless to say, these numerical values do not limit the present invention.

### 2. Other embodiments

Embodiment 1 is directed to a segmented-in-series fuel cell. That is, in Embodiment 1, in the fuel cell 1, two or more power-generating sections 10 are provided on one support substrate 2, and an interconnector 7 is disposed so as to electrically connect the power-generating sections 10 provided on the support substrate 2.

However, the present invention is applicable not only to segmented-in-series type of SOFC but also to flat-tubular type, planar type, cylindrical type, and various other types of SOFC.
A brief description will now be given of a flat-tubular solid oxide fuel cell. The fuel cell may include two or more unit cells each including an anode current collecting layer, an anode active layer, a cathode, and an electrolyte layer. The unit cells are stacked in the thickness direction of the anode current collecting layer. In this case, an interconnector is disposed so as to electrically connect two power-generating sections that are adjacent in the thickness direction. In this case, in addition to the interconnector, the same layer as the current collecting layer 8 may be provided as necessary.
In other words, the fuel cell has first and second unit cells. The anode current collecting layer of the first unit cell and the anode current collecting layer of the second unit cell are disposed so as to sandwich the cathode of the first unit cell. Naturally, the same configuration is also applicable to a third unit cell and subsequent unit cells.

The present invention is applicable to anode-supported fuel cells. Specifically, it is possible that such a fuel cell includes an anode current collecting layer as a support substrate. An anode active layer and other components are disposed on the anode current collecting layer. The anode current collecting layer that serves as a support substrate is relatively thicker than other layers. The thickness of the anode current collecting layer serving as a support substrate is not limited to a specific value, and the size of the above-described support substrate is applicable.

The flat-tubular type and segmented-in-series type of configurations are both encompassed within the configuration in which an interconnector "electrically connects two power-generating sections".

### EXAMPLES

### 1. Suppression of insulating layer formation

### Specimen preparation

NiO powder and YSZ powder were mixed such that the Ni concentration after reduction would be 35 volume%. The mixture was granulated by spray drying (SD). The resulting powder was uniaxially pressed at 40 MPa so as to form preparatory pellets. Thereafter, the pellets were subjected to isostatically pressed at 100 MPa by cold isostatic pressing (CIP) to yield an NiO-YSZ green body in a pellet form.

The materials shown in Table 1 were applied by screen printing to the upper and lower surfaces of the NiO-YSZ green body. The layers thus formed are referred to as print layers. In Examples 1 to 5, mixtures of NiO with one of CaZrO₃, CaTiO₃, (Ca_{0.9}La_{0.1})TiO₃, (Ca_{0.9}La_{0.1})ZrO₃, and (Ca_{0.9}La_{0.1})(Ti_{0.95}Nb_{0.05})O₃, respectively, were used as print layer materials such that the proportion of Ni after reduction process was 40 volume%. In contrast, in Comparative Example 1, a mixture of NiO and Y₂O₃ was used as the print layer material such that the proportion ofNi after reduction process was 40 volume%.
Sintering the printed green body at 1400°C yielded a sintered body. Moreover, Pt paste was applied to the upper and lower surfaces of the sintered body. Thereafter, the specimen was subjected to a reduction treatment at 800°C in H₂.

The resulting specimen was in a disc-like shape (pellets) having a total thickness (sum of the Ni-YSZ layer thickness and the print layer thickness) of 2 mm and a diameter of 15 mm. The thickness of each print layer was 10 µm.

### Voltage measurement

The voltage across the resulting specimen was measured at room temperature when a constant current of 1 A was applied between the upper and lower surfaces, and an electric resistance was calculated based on the measurement result. The results are shown in Table 1.

### Measurement of pressure loss

Helium gas was supplied to one surface of the resulting specimen at a constant flow rate, and the pressure loss that occurred when helium gas passed through the specimen was measured. The flow rate of helium gas was 20 cc/min. The results are shown in Table 1.

### Interface observation

The resulting specimen was embedded in resin and polished so as to expose the cross-section of the specimen. An SEM micrograph of the cross-section was taken and the presence or absence of an insulating layer was determined from the micrograph.

### Results

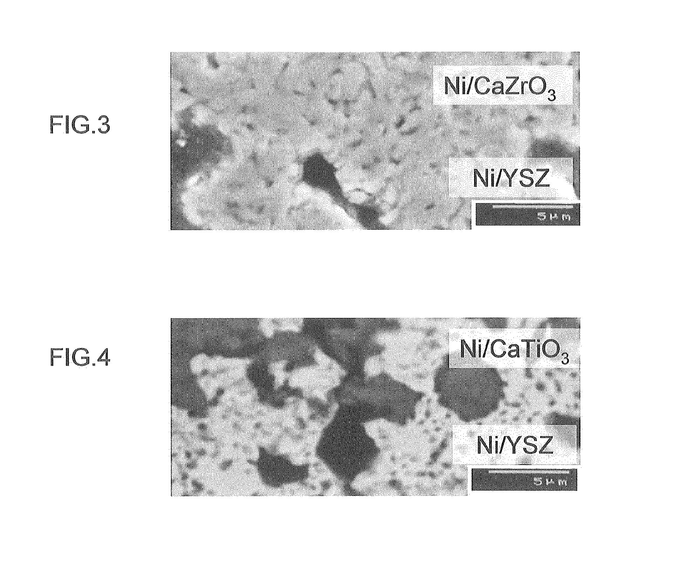

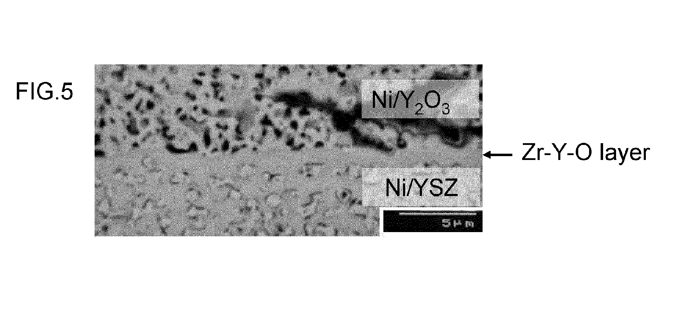

As shown in Table 1, when the print layer contained CaZrO₃, CaTiO₃, (Ca_{0.9}La_{0.1})TiO₃, (Ca_{0.9}La_{0.1})ZrO₃, or (Ca_{0.9}La_{0.1})(Ti_{0.95}Nb_{0.05})O₃ (Examples 1 to 5), no insulating layer was formed between the print layer and the Ni-YSZ substrate (Figs. 3 and 4). Also, a voltage drop in Examples 1 to 5 was small. That is, in Examples 1-5, the electric resistance was small.
In contrast, in Comparative Example 1, a Zr-Y-O insulating layer was observed (Fig. 5). A voltage drop was larger in Comparative Example 1 than in Examples 1 to 5. That is, the electric resistance in Comparative Example 1 was high.
The pressure loss in Comparative Example 1 was large, and the pressure loss in Examples 1 to 5 was suppressed to about 1/10 of that in Comparative Example 1.

**Table 1**

| | Printing material | Presence of insulating layer | Voltage drop (mV) | Pressure loss (kPa) |
|---|---|---|---|---|
| Ex. 1 | NiO/CaZrO₃ | No | 0.7 | 30 |
| Ex. 2 | NiO/CaTiO₃ | No | 0.7 | 30 |
| Ex. 3 | NiO/(Ca_{0 9}La_{0 1})TiO₃ | No | 0.7 | 35 |
| Ex. 4 | NiO/(Ca_{0 9}La_{0 1})ZrO₃ | No | 0.6 | 30 |
| Ex. 5 | NiO/(Ca_{0 9}La_{0 1})(Ti_{0 95}Nb_{0 05})O₃ | No | 0.6 | 35 |
| Comp. Ex.1 | NiO/Y₂O₃ | Yes | 3.7 | 300 |

### 2. Enhancement in strength of anode current collecting layer by addition of Si Specimen preparation

First, NiO and CaZrO₃ were weighed such that the proportion in terms of volume of Ni in the entire solid phase after reduction was 40 vol%, and mixed powder was prepared.
Next, relative to the mixed powder, 10 wt% of polymethylmethacrylate (PMMA: average particle size of 5 µm) and a specific amount of SiO₂ were added, and then pot-mixed using YTZ beads (diameter ϕ of 5 mm) and IPA to yield a mixed slurry. PMMA is a pore forming agent and IPA (isopropyl alcohol) is a organic solvent. At this time, as shown in Table 2, the amount of SiO₂ added was suitably controlled such that the Si content in Examples 6 to 14 would cover the range of 2 ppm to 5000 ppm entirely.
Next, the mixed slurry was dried in a oven (80°C, in nitrogen), and then passed through a sieve having a mesh size of 150 µm for granulation to yield powder for pressing.
Next, the powder was uniaxially pressed at 0.4 t/cm², and then subjected to final molding using a CIP molding machine at 3.0 t/cm² to yield a green body.
Next, the green body was sintered over 2 hours in an electric furnace (1400°C) to yield a sintered body.
Next, the sintered body was cut into a specimen (bending rod) of Examples 6 to 14 conforming to a four-point bending strength test for porous materials according to the JIS standards.

### Measurement of Si content

The Si content of the specimens of Examples 6 to 14 was measured by inductively coupled plasma atomic emission spectroscopy (ICP-AES). The Si content of each specimen is shown in Table 2.

### Bending strength test

A four-point bending strength test for porous materials was carried out according to the JIS standards using the specimens (bending rods) of Examples 6 to 14. The results of measuring the strength of each specimen are shown in Table 2.

### Porosity measurement

The porosity of the specimens of Examples 6 to 14 was calculated according to the Archimedes method. The results of calculating the porosity of each specimen are shown in Table 2.

### Results

As shown in Table 2, as the Si content was increased from 2 ppm toward 5000 ppm, strength tended to be enhanced, and porosity tended to be decreased. This is because Si contained in the green body functioned as a sintering aid in the sintering step, and the sintering of the green body was enhanced.
The results provided above confirmed that the presence of Si in an anode current collecting layer containing CaZrO₃ and NiO can enhance the strength of the anode current collecting layer.
Also, as shown in Table 2, it was found that a sufficient strength of 60 MPa or greater was obtained in Examples 7 to 14 where the Si content was 5 ppm or greater. Also, as shown in Table 2, it was found that a sufficient porosity of 15% or greater was obtained in Examples 6 to 13 where the Si content was 2000 ppm or less.
Therefore, it was confirmed that, in the case where the anode current collecting layer contains CaZrO₃, NiO, and Si, sufficient strength and suitable porosity of the anode current collecting layer can be simultaneously achieved by controlling the Si content to be 5 ppm or greater and 2000 ppm or less.

**Table 2**

| | Si content (ppm) | Porous material four-point bending strength (MPa) | Porosity of porous material (%) |
|---|---|---|---|
| Ex. 6 | 2 | 30 | 51 |
| Ex. 7 | 5 | 60 | 28 |
| Ex. 8 | 10 | 72 | 27 |
| Ex. 9 | 50 | 65 | 26 |
| Ex. 10 | 100 | 85 | 27 |
| Ex. 11 | 500 | 88 | 25 |
| Ex. 12 | 800 | 115 | 18 |
| Ex. 13 | 2000 | 127 | 15 |
| Ex. 14 | 5000 | 141 | 5 |

### 3. Enhancement of strength of anode current collecting layer by addition of Fe Specimen preparation

First, NiO and CaZrO₃ were weighed such that the proportion in terms of volume of Ni in the entire solid phase after reduction would be 40 vol%, and mixed powder was prepared.
Next, relative to the mixed powder, 10 wt% of PMMA (average particle size of 5 um), a specific amount of SiO₂, and a specific amount of Fe₂O₃ were added, and then pot-mixed using YTZ beads (diameter ϕ of 5 mm) and IPA to yield a mixed slurry. At this time, as shown in Table 3, the amount of Fe₂O₃ added was suitably controlled such that the Fe content in Examples 15 to 25 would cover the range of 0 ppm to 10000 ppm entirely. The amount of SiO₂ added was controlled such that the Si content in Examples 15 to 25 would be the same as in Example 9 above.
Next, the mixed slurry was dried in a oven (80°C, in nitrogen), and then passed through a sieve having a mesh size of 150 µm for granulation to yield powder for pressing.
Next, the powder was uniaxially pressed at 0.4 t/cm², and then subjected to final molding using a CIP molding machine at 3.0 t/cm² to yield a green body.
Next, a first layer (15 µm) composed of NiO and 8YSZ and a second layer (20 µm) containing 8YSZ were sequentially applied to a surface of the green body by screen printing.
Next, the green body, the first layer, and the second layer were sintered over 2 hours in an electric furnace (1400°C) to yield the co-sintered body of each of Examples 15 to 25. Thus, an anode current collecting layer was formed from the green body, an anode active layer was formed from the first layer, and an electrolyte layer was formed from the second layer.

### Bending strength test

First, only the anode current collecting layer of the co-sintered body of each of Examples 15 to 25 was cut out.
Next, the anode current collecting layers of Examples 15 to 25 were cut into specimens (bending rods) conforming to a four-point bending strength test for porous materials according to the JIS standards.
Next, a four-point bending strength test for porous materials was performed according to the JIS standards on the bending rods of Examples 15 to 25. The results of measuring the strength of each specimen are shown in Table 3.

### Examination for crack in electrolyte layer surface

First, the co-sintered bodies of Examples 15 to 25 were exposed to hydrogen at 800°C for 3 hours, and then cooled to room temperature. Next, the surface of the electrolyte layers of Examples 15 to 25 was observed using a microscope to determine the presence or absence of a crack. The results of the examination of the specimens are shown in Table 3.

### Results

As shown in Table 3, the strength of the anode current collecting layer was enhanced in Examples 16 to 25 where Fe was used compared with Example 15 where Fe was not used.
This is because Fe was present as a eutectic compound (Fe-Si-O) in the step of sintering the anode current collecting layer, thus enhancing the grain growth in the anode current collecting layer.
The results provided above confirmed that the presence of Fe in an anode current collecting layer containing CaZrO₃, NiO, and Si can further enhance the strength of the anode current collecting layer.
Also, as shown in Table 3, in Examples 16 to 23 where the Fe content was 10000 ppm or less, no crack was formed in the surface of the electrolyte layer.
Therefore, it was found that, in the case where the anode current collecting layer contains CaZrO₃, NiO, Si, and Fe, crack generation in the electrolyte layer formed on the anode can be suppressed by controlling the Fe content to be 5 ppm or greater and 10000 ppm or less.
In Examples 24 and 25, formation of small cracks in the electrolyte layer was identified. Cracks were formed because the Fe component was changed to FeO or Fe in a reducing atmosphere, and thus the volume of the anode current collecting layer was changed. However, cracks observed in Examples 24 and 25 were very small, and therefore had no affect on the properties of the fuel cell as a whole.
In Examples 15 to 25, Si was added in the same amount as in Example 9 above, but it is clear that enhancement of the strength of the anode current collecting layer can be expected from the addition of Fe irrespective of the addition of Si.

**Table 3**

| | Fe content (ppm) | Porous material four-point bending strength (MPa) | Crack in electrolyte layer surface |
|---|---|---|---|
| Ex. 15 | 0 | 65 | None |
| Ex. 16 | 5 | 102 | None |
| Ex. 17 | 20 | 112 | None |
| Ex. 18 | 50 | 140 | None |
| Ex. 19 | 100 | 123 | None |
| Ex. 20 | 500 | 115 | None |
| Ex.21 | 1000 | 134 | None |
| Ex. 22 | 5000 | 119 | None |
| Ex. 23 | 10000 | 127 | None |
| Ex. 24 | 50000 | 128 | Small cracks |
| Ex. 25 | 100000 | 131 | Small cracks |

## Claims

1. A solid oxide fuel cell comprising:
an anode current collecting layer containing Ni or NiO, and an oxide represented by a general formula AEZrO₃ where AE is one or a combination of two or more selected from the group consisting of Ca, Sr, Mg, and Ba;
a cathode;
an electrolyte layer disposed between the anode current collecting layer and the cathode; and
an anode active layer disposed between the electrolyte layer and the anode current collecting layer.

2. The solid oxide fuel cell according to claim 1, wherein
the anode current collecting layer contains CaZrO₃, NiO, and Si.

3. The solid oxide fuel cell according to claim 2, wherein
the anode current collecting layer has an Si content of 5 ppm or greater and 2000 ppm or less.

4. The solid oxide fuel cell according to claim 2, wherein
the anode current collecting layer further contains Fe.

5. The solid oxide fuel cell according to claim 4, wherein
the anode current collecting layer has an Fe content of more than 0 ppm and 10000 ppm or less.

6. The solid oxide fuel cell according to claim 1, wherein
the anode active layer contains zirconia.

7. The solid oxide fuel cell according to of claim 1 further comprising:
two power-generating sections each having the anode current collecting layer, the anode active layer, the cathode, and the electrolyte layer; and
an interconnector electrically connecting the two power-generating sections.

8. The solid oxide fuel cell according to claim 7, further comprising a substrate, wherein
the two power-generating sections are provided on the substrate, and
the interconnector is disposed so as to electrically connect the two power-generating sections provided on the substrate.

9. The solid oxide fuel cell according to claim 1, further comprising:
two unit cells each having the anode current collecting layer, the anode active layer, the cathode, and the electrolyte layer, and being stacked one on top of the other; and
an interconnector electrically connecting the two unit cells.
